# EUROPÄISCHE PATENTANMELDUNG

(11) **EP 4 530 450 A1**
(43) Veröffentlichungstag der Anmeldung: **02.04.2025**
(21) Anmeldenummer: 24189095.3
(22) Anmeldetag: 17.07.2024
(51) Int. Cl.: F01N 13/18, F16J 15/06, F16L 23/22

(54) **KOPPLUNGSKOMPONENTE ZUR DICHTEN KOPPLUNG EINES ERSTEN UND EINES ZWEITEN GASFÜHRENDEN BAUTEILS EINER ABGASANLAGE**

(30) Priorität: 26.09.2023 DE 102023126037
(71) Anmelder: Friedrich Boysen GmbH & Co. KG, 72213 Altensteig (DE)
(72) Erfinder: Gebauer, Markus, 70563 Stuttgart (DE)
(74) Vertreter: Manitz Finsterwald Patent- und Rechtsanwaltspartnerschaft mbB

(57) **Zusammenfassung**

Die Erfindung betrifft eine Kopplungskomponente zur dichten Kopplung eines ersten und eines zweiten gasführenden Bauteils einer Abgasanlage, insbesondere zur Kopplung zweier Rohrleitungsabschnitte, umfassend: eine Öffnung (18), in welcher ein Endabschnitt des ersten Bauteils aufnehmbar ist, einen die Öffnung (18) umgebenden Anlageabschnitt (20) mit einer Anlagefläche, die mit einer komplementären Fläche eines Anlageabschnitts (20) einer Kopplungskomponente des zweiten Bauteils in Anlage bringbar ist und die einen die Anlagefläche radial au-ßerhalb und in Umfangsrichtung umgebenden Dichtungsabschnitt aufweist, der eine sich in axialer Richtung erstreckende Aufpressfläche (26) umfasst, und eine auf die Aufpressfläche (26) aufgepresste hitzebeständige Dichtung, wobei die die Dichtung verliersicher an der Aufpressfläche (26) fixiert ist.

## Beschreibung

Die vorliegende Erfindung bezieht sich auf eine Kopplungskomponente zur dichten Kopplung eines ersten und eines zweiten gasführenden Bauteils einer Abgasanlage und auf ein Verfahren zur Herstellung einer entsprechenden Kopplungskomponente. Die Erfindung bezieht sich außerdem auf ein Zusammenbauteil sowie eine Kopplungskonstruktion.

Abgasanlagen, wie sie vor allem in der Automobilbranche eingesetzt werden, führen Verbrennungsprodukte eines Verbrennungsmotors über gasführende Bauteile und insbesondere Rohrleitungen ab. Solche Anlagen umfassen in der Regel auch schalldämpfende und/oder abgasreinigende Komponenten. Um zu verhindern, dass die Verbrennungsprodukte (Abgase) ungereinigt in die Umgebungsluft gelangen, ist die Gasdichtheit der Anlage von großer Bedeutung.

Entsprechend wichtig ist daher eine dichte Kopplung der gasführenden Bauteile, um die Gase auf sichere Weise abführen zu können. Für die Kopplung der gasführenden Bauteile werden in der Regel Kopplungskomponenten wie etwa Flansche verwendet, welche an den gasführenden Bauteilen befestigt sind. Um die Kopplung der gasführenden Bauteile so dicht wie möglich zu gestalten, wird eine Dichtung verwendet, die zwischen den Kopplungskomponenten angeordnet ist und die einen ungewünschten Gasaustritt verhindert. Die entsprechenden gasführenden Bauteile mit daran befestigten Kopplungskomponenten werden in der Regel vorgefertigt beim Fahrzeughersteller angeliefert und dann am Fahrzeug montiert.

Die Kopplungskomponenten werden in der Regel separat von den Dichtungen transportiert, so dass eine erhöhte Verlustgefahr der Dichtungen besteht. Zusätzlich müssen die Dichtungen bei der Montage an dem Fahrzeug an den jeweiligen Kopplungskomponenten korrekt positioniert werden, was einen erhöhten Zeitaufwand darstellt.

Eine der Erfindung zugrundeliegende Aufgabe ist es daher, bei diesen Problemen Abhilfe zu schaffen.

Die der Erfindung zugrundeliegende Aufgabe wird durch den Gegenstand des Anspruchs 1 gelöst.

Erfindungsgemäß umfasst die Kopplungskomponente zur dichten Kopplung eines ersten und eines zweiten gasführenden Bauteils einer Abgasanlage, insbesondere zur Kopplung zweier Rohrleitungsabschnitte:
eine Öffnung, in welcher ein Endabschnitt des ersten Bauteils aufnehmbar ist;
einen die Öffnung umgebenden Anlageabschnitt mit einer Anlagefläche, die mit einer komplementären Fläche eines Anlageabschnitts einer Kopplungskomponente des zweiten Bauteils in Anlage bringbar ist und die einen die Anlagefläche radial außerhalb und in Umfangsrichtung umgebenden Dichtungsabschnitt aufweist, der eine sich in axialer Richtung erstreckende Aufpressfläche umfasst; und
eine auf die Aufpressfläche aufgepresste hitzebeständige Dichtung, wobei die die Dichtung verliersicher an der Aufpressfläche fixiert ist.

Kurz gesagt sorgt die Presskraft zwischen der hitzebeständigen Dichtung und der Aufpressfläche dafür, dass die Dichtung an der Aufpressfläche fixiert ist. Insbesondere wird die Dichtung so fixiert, dass ein Verlust der Dichtung beim Transport der Kopplungskomponente verhindert wird und auf einen zusätzlichen Montageschritt beim Fahrzeughersteller (nämlich das Einlegen der Dichtung) verzichtet werden kann. Durch eine lagekorrekte Vormontage der Dichtung wird zudem eine potentielle Fehlerquelle bei der Anbringung der Kopplungskomponente an einer komplementären Komponente des Fahrzeugs eliminiert. Insbesondere ist die Dichtung derart fixiert, dass die Dichtung nur mit externem Kraftaufwand (z.B. durch einen Menschen mit einem Werkzeug) von der Kopplungskomponente gelöst werden kann, nicht aber durch Kräfte, die bei einem sachgerechten Handling und/oder Transport der Kopplungskomponente bzw. der Bauteile, an der der sie befestigt ist, auftreten.

Die Formulierung "eine sich in axialer Richtung erstreckende Aufpressfläche" umfasst neben Aufpressflächen, die nur eine axiale Richtungskomponente aufweisen (z.B. eine Zylinderfläche) auch Aufpressflächen komplexerer Geometrie, bei denen der Abstand zu einer Mittelachse der Öffnung variiert, z.B. in Aufbringrichtung der Dichtung (abschnittweise oder stetig) zunimmt. Beispielsweise kann die Aufpressfläche eine (leichte) Konusform aufweisen. Eine derartige Ausgestaltung kann die Fixierung der Dichtung erleichtern, da die zwischen der Aufpressfläche und der Dichtung zunehmenden Presskraft bei einem Aufschieben der Dichtung zunimmt.

Die Dichtung ist insbesondere ringförmig ausgebildet. Die Dichtung kann ferner derart ausgebildet sein, dass der Umfang der Öffnung der ringförmigen Dichtung - in einem Zustand, in dem die Dichtung nicht an der Aufpressfläche befestigt ist - (geringfügig) kleiner als der Umfang der in Umfangsrichtung verlaufenden Aufpressfläche ist. Im aufgepressten Zustand der Dichtung können somit eine starke Reibkraft bzw. ein Kraftschluss zwischen der Dichtung und der Aufpressfläche ausgebildet sein.

Insbesondere verläuft die Aufpressfläche senkrecht zu der durch die Öffnung aufgespannte Ebene. Die Aufpressfläche kann aber auch in einem vordefinierten Winkel, d.h. schräg, insbesondere in einem 45°-, 60°- oder 75°-Winkel, zur durch die Öffnung aufgespannten Ebene verlaufen.

Im Übrigen kann der Dichtungsabschnitt in einer Frontansicht eine beliebige Form, beispielsweise eine kreisrunde, ovale, quadratische, rechteckige, polygonale oder jede andere geometrische Grundform aufweisen. Mischformen sind möglich.

Entsprechend kann die Kopplungskomponente eine beliebige Grundform oder Außenkontur aufweisen. Die erfindungsgemäße Kopplungskomponente kann insbesondere zur Kopplung von Rohren, Stutzen oder jeglichen anderen rohrartigen Bauteilen verwendet werden.

Nachfolgend werden die Formulierungen "montierter Zustand" und "gekoppelter Zustand" gleichbedeutend verwendet.

Weitere Ausführungsformen der Erfindung sind der Beschreibung, den Unteransprüchen sowie den Zeichnungen zu entnehmen.

Gemäß einer ersten Ausführungsform ist die Dichtung nur reib- und/oder kraftschlüssig an der Aufpressfläche fixiert. Dementsprechend werden keine weiteren Befestigungsteile zur Befestigung der Dichtung an der Kopplungskomponente benötigt, sodass die Kopplungskomponente besonders materialschonend und kosteneffizient hergestellt werden kann. Auch die Montage der Dichtung wird bei einer derartigen Befestigung der Dichtung an der Kopplungskomponente vereinfacht, da keine aufwändigen Montageschritte durchgeführt werden müssen. Ferner werden auch keine speziellen Dichtungen, beispielsweise spezielle Verformungen in der Dichtung, benötigt, um die Dichtung an der Kopplungskomponente zu fixieren. Vielmehr können für die Befestigung der Dichtung an der Kopplungskomponente bzw. an der Aufpressfläche herkömmliche Dichtungsformen verwendet werden.

Gemäß einer weiteren Ausführungsform ist die Dichtung zumindest teilweise, insbesondere vollständig, aus Graphit gefertigt, um den hohen Temperaturen, die in Abgasanlagen insbesondere in motornahen Bereichen auftreten, standhalten zu können. Grundsätzlich können aber auch andere geeignete, hitzebeständige Materialien zum Einsatz gelangen. Insbesondere ist die Dichtung so ausgelegt, dass sie Temperaturen bis zumindest 500°C standhält.

Gemäß einer weiteren Ausführungsform weist der Anlageabschnitt eine äußere Anlagefläche auf, die den Dichtungsabschnitt in radialer Richtung außerhalb umgibt. Der äußere Anlageabschnitt kann im Vergleich zum Dichtungsabschnitt und/oder zur Anlagefläche großflächiger ausgebildet sein. Insbesondere ist die Fläche der äußeren Anlagefläche größer als die doppelte, dreifache oder vierfache Fläche der Anlagefläche und/oder der Dichtungsanlagefläche. Insbesondere wird die äußere Anlagefläche mit einer entsprechenden äußeren Anlagefläche der zweiten Kopplungskomponente, d.h. der Kopplungskomponente des zweiten gasführenden Bauteils, - in einem gekoppelten Zustand des ersten und zweiten gasführenden Bauteils -, insbesondere vollständig, in Kontakt gebracht. Insbesondere ist der Dichtungsabschnitt zwischen der Anlagefläche und der äußeren Anlagefläche angeordnet, d.h. die äußere Anlagefläche ist eine den Dichtungsabschnitt bzw. die Dichtungsanlagefläche radial außerhalb und in Umfangsrichtung umgebende Fläche.

Gemäß einer weiteren Ausführungsform umfasst der Dichtungsabschnitt eine sich in radialer Richtung erstreckende Dichtungsanlagefläche, insbesondere wobei die Dichtungsanlagefläche und die äußere Anlagefläche in einer gemeinsamen Ebene angeordnet sind. Die Dichtungsanlagefläche kann in die äußere Anlagefläche übergehen. Insbesondere sind die Dichtungsanlagefläche und die äußere Anlagefläche dadurch voneinander unterscheidbar, dass die Dichtungsanlagefläche in Kontakt mit der Dichtung steht, während die äußere Anlagefläche frei bzw. unbedeckt ist, um mit der entsprechenden äußeren Anlagefläche der zweiten Kopplungskomponente im gekoppelten Zustand in direkten Kontakt zu treten.

Gemäß einer Ausführungsform umfasst die erfindungsgemäße Kopplungskomponente einen sich aus der Ebene, in der die Dichtungsanlageflächen und/oder die äußere Anlagefläche angeordnet sind (d.h. Dichtungsanlagefläche und die äußere Anlagefläche können in einer Ebene oder in versetzten Ebenen liegen), erstreckenden Aufpressabschnitt, welcher die Aufpressfläche und die Anlagefläche umfasst. Der Abstand zwischen der Ebene der Anlagefläche und der Ebene der Dichtungsanlagefläche und/oder der äußeren Anlagefläche bestimmt dabei die Breite (axiale Erstreckung) der Aufpressfläche.

Gemäß einer weiteren Ausführungsform grenzen die Aufpressfläche und die Dichtungsanlagefläche aneinander, insbesondere sind die Aufpressfläche und die Dichtungsanlagefläche zumindest abschnittsweise senkrecht zueinander angeordnet. Insbesondere steht die Aufpressfläche somit senkrecht von der Ebene der Dichtungsanlagefläche ab. Die Aufpressfläche geht insbesondere an einem Krümmungsabschnitt in die Dichtungsanlagefläche über. Durch die vorstehende Gestaltung der Aufpressfläche wird insbesondere das Aufpressen der Dichtung auf die Aufpressfläche erleichtert, während gleichzeitig eine stabile Befestigung der Dichtung erreicht wird. Ferner dient die Dichtungsanlagefläche der Dichtung als eine Art Bewegungsbegrenzung in axialer Richtung, d.h. die Dichtungsanlagefläche legt fest, wie weit die Dichtung in zumindest eine axiale Richtung verschoben werden kann.

Gemäß einer weiteren Ausführungsform sind die Anlagefläche und die äußere Anlagefläche parallel versetzt angeordnet. Insbesondere ist die Ebene, in der die Anlagefläche liegt, und die Ebene, in der die äußere Anlagefläche liegt, parallel versetzt angeordnet. Der axiale Abstand der beiden Ebenen kann dabei der Breite der Aufpressfläche, d.h. die Länge der Erstreckung der Aufpressfläche in axialer Richtung, entsprechen.

Gemäß einer weiteren Ausführungsform ragt die Dichtung in einem Zustand, in dem das erste und das zweite Bauteil nicht gekoppelt sind, in axialer Richtung zumindest teilweise (geringfügig) über die Anlagefläche hinaus. Insbesondere ist der über die Anlagefläche hinausragende Teil der Dichtung in axialer Richtung kürzer als die Breite der Aufpressfläche, insbesondere kürzer als 25%, 10% oder 5% der Breite der Aufpressfläche. In einem gekoppelten Zustand des ersten und zweiten Bauteils kann somit auf den über die Anlagefläche hinausragenden Teil der Dichtung derart Druck ausgeübt werden, dass sich das Dichtungsmaterial verformt, insbesondere plastisch verformt, und verteilt, beispielsweise um eventuell bestehende Hohlräume in einem die Dichtung aufnehmenden Raum auszufüllen. Insbesondere wird das Dichtungsergebnis in einem gekoppelten Zustand durch das zusätzliche Dichtungsmaterial verbessert.

Ein weiterer Aspekt der Erfindung betrifft ein Zusammenbauteil umfassend eine Kopplungskomponente nach einem der vorstehenden Ansprüche und ein erstes gasführendes Bauteil einer Abgasanlage, insbesondere ein Rohrleitungsabschnitt, wobei die Kopplungskomponente flanschartig ausgebildet ist und/oder wobei die Kopplungskomponente mit dem ersten Bauteil einstückig ausgebildet ist oder stoffschlüssig, kraftschlüssig und/oder formschlüssig verbunden ist.

Die Kopplungskomponente kann aber auch stoffschlüssig durch beispielsweise Löten, Kleben und/oder Schweißen mit dem ersten gasführenden Bauteil verbunden sein. Es ist beispielsweise aber auch möglich, dass die Kopplungskomponente zusätzlich oder alternativ mittels einer Schraub- (insbesondere mittels einer Mehrzahl von Schrauben und Muttern), Steck- und/oder Rastverbindung mit dem ersten gasführenden Bauteil verbunden ist. Insbesondere kann die Kopplungskomponente als ein vergleichsweise flaches Element ausgebildet sein und einen Ansatz, Bund oder Stutzen aufweisen, der mit dem gasführenden Bauteil verbunden wird, beispielsweise durch Verschweißen. Ferner kann die Kopplungskomponente einen hülsenförmigen Einsteckabschnitt umfassen, in den das erste Bauteil eingesteckt werden kann. Der Einsteckabschnitt kann derart ausgebildet sein, dass nach einem Einstecken des ersten Bauteils in den Einsteckabschnitt eine kraftschlüssige und/oder formschlüssige Verbindung zwischen der Kopplungskomponente und dem ersten Bauteil gebildet wird.

Ein weiterer Aspekt der Erfindung betrifft ein Verfahren zur Herstellung einer Kopplungskomponente mit den Schritten:
Bereitstellen einer Kopplungskomponente nach einem der vorstehenden Ansprüche ohne eine aufgepresste Dichtung,
Bereitstellen einer Dichtung und
Befestigung der Dichtung an der Kopplungskomponente, wobei die Dichtung auf die Aufpressfläche aufgepresst wird, insbesondere in axialer Richtung auf die Aufpressfläche aufgeschoben wird, sodass eine Reibungskraft zwischen der Dichtung und der Aufpressfläche ausgebildet wird, um die Dichtung verliersicher an der Aufpressfläche zu fixieren.

Beim Montieren bzw. Befestigen der Dichtung an der Aufpressfläche kann ein entsprechender Kraftaufwand durch einen Monteur oder eine Maschine nötig sein, um die Dichtung kurzzeitig zu verformen. Beispielsweise kann der Umfang der in Umfangsrichtung verlaufenden Aufpressfläche (geringfügig) größer sein als der Umfang der Öffnung der Dichtung. Wenn die Dichtung auf die Aufpressfläche aufgepresst wird, muss also zusätzlicher Kraftaufwand aufgebracht werden, um die Dichtung an der Aufpressfläche zu befestigen. Dabei können hohe Reibkräfte zwischen der Dichtung und der Aufpressfläche entstehen, welche dafür sorgen, dass die Dichtung an der Aufpressfläche verliersicher fixiert wird und nach der Montage nur noch mit beträchtlichem Kraftaufwand von der Aufpressfläche entfernt werden kann. Wie vorstehend bereits erläutert, kann das Aufbringen der Dichtung durch eine Anpassung der Geometrie der Aufpressfläche erleichtert werden (z.B. Aufpressfläche mit leichter Konusform).

Ein weiterer Aspekt der Erfindung betrifft eine Kopplungskonstruktion, umfassend eine erste Kopplungskomponente gemäß einer der vorstehend beschriebenen Ausführungsformen und eine zweite Kopplungskomponente, wobei die zweite Kopplungskomponente eine Öffnung, in welcher ein Endabschnitt des zweiten gasführenden Bauteils aufnehmbar ist, einen die Öffnung umgebenden Anlageabschnitt mit einer Anlagefläche, der mit einem Anlageabschnitt der ersten Kopplungskomponente in Anlage bringbar ist, und die einen die Anlagefläche radial außerhalb und in Umfangsrichtung umgebenden Dichtungsabschnitt aufweist, wobei der Dichtungsabschnitt einen ersten, sich in axialer Richtung erstreckenden Dichtungsabschnitt und einen zweiten, sich in radialer Richtung erstreckenden Dichtungsabschnitt aufweist, wobei - in einem montierten Zustand - die Anlagefläche der ersten Kopplungskomponente zumindest abschnittsweise an der Anlagefläche der zweiten Kopplungskomponente anliegt und wobei die erste und zweite Kopplungskomponente mittels eines Befestigungsmittels aneinander befestigt sind, wobei der Dichtungsabschnitt der ersten Kopplungskomponente und der Dichtungsabschnitt der zweiten Kopplungskomponente im montierten Zustand einen in Umfangsrichtung laufenden Dichtungsraum bilden, in dem eine Dichtung angeordnet und verpresst ist.

Im gekoppelten Zustand wird die Dichtung also in dem Dichtungsraum derart verpresst, dass das durch das erste und zweite gasführende Bauteil strömende Gas nicht über eine Schnittstelle zwischen der ersten und zweiten Kopplungskomponente austreten kann. Insbesondere wenn die erste und zweite Kopplungskomponente in Anlage gebracht werden, drückt die Dichtung in dem Dichtungsraum gegen die Innenwände des Dichtungsraums, d.h. gegen die Dichtungsanlagefläche und Aufpressfläche der ersten Kopplungskomponente und gegen den ersten und zweiten Dichtungsabschnitt der zweiten Kopplungskomponente, sodass der Dichtungsraum abgedichtet wird und kein Gas über den Dichtungsraum in den Außenraum austreten kann.

Wie schon die erste Kopplungskomponente kann auch die zweite Kopplungskomponente zusätzlich zur Anlagefläche eine äußere Anlagefläche im Bereich des Anlageabschnitts umfassen. Im gekoppelten Zustand ist dann der Anlageabschnitt der ersten Kopplungskomponente und der Anlageabschnitt der zweiten Kopplungskomponente zumindest abschnittsweise in direktem Kontakt miteinander. Beispielsweise liegt die Anlagefläche der ersten Kopplungskomponente zumindest teilweise, insbesondere vollständig, an der Anlagefläche der zweiten Kopplungskomponente an und liegt die äußere Anlagefläche der ersten Kopplungskomponente an der äußeren Anlagefläche der zweiten Kopplungskomponente zumindest teilweise, insbesondere vollständig, an. Wenn die jeweiligen Anlageflächen und äußeren Anlageflächen aneinander anliegen, wird ein geschlossener Dichtungsraum gebildet, der in Umfangsrichtung verläuft und durch die Dichtungsanlagefläche und Aufpressfläche der ersten Kopplungskomponente und dem ersten und zweiten Dichtungsabschnitt der zweiten Kopplungskomponente begrenzt wird. In diesem Dichtungsraum wird die Dichtung derart verpresst, dass das Gas, welches zwischen dem ersten und zweiten gasführenden Bauteil geführt wird, nicht in den Außenraum gelangen kann.

Gemäß einer weiteren Ausführungsform weist der Anlageabschnitt der ersten Kopplungskomponente und der Anlageabschnitt der zweiten Kopplungskomponente einen jeweiligen Befestigungsabschnitt auf, mittels dem die erste Kopplungskomponente an der zweiten Kopplungskomponente befestigbar ist, insbesondere lösbar befestigbar. Der Befestigungsabschnitt der ersten und der Befestigungsabschnitt der zweiten Kopplungskomponente kann hierfür eine Mehrzahl von Öffnungen umfassen. Beispielsweise kann die an der zweiten Kopplungskomponente anliegende erste Kopplungskomponente kraftschlüssig und/oder formschlüssig mittels Schraubverbindungen, insbesondere mittels Schrauben und Muttern, mit der zweiten Kopplungskomponente verbunden werden.

Für das erfindungsgemäße Zusammenbauteil, Verfahren und der erfindungsgemäßen Kopplungskonstruktion gelten sinngemäß die Ausführungen zu der erfindungsgemäßen Kopplungskomponente (und umgekehrt); dies gilt insbesondere hinsichtlich der erläuterten Ausführungsformen und der damit einhergehenden Vorteile.

Nachfolgend wird die Erfindung rein beispielhaft unter Bezugnahme auf die Zeichnungen dargestellt. Es zeigen:
- Fig. 1: eine Querschnittsansicht einer ersten Kopplungskomponente,
- Fig. 2: eine Frontansicht einer ersten Kopplungskomponente,
- Fig. 3: eine perspektivische Ansicht einer ersten Kopplungskomponente,
- Fig. 4: eine Querschnittsansicht einer Kopplungskonstruktion mit einer ersten und einer zweiten Kopplungskomponente und
- Fig. 5: eine Querschnittsansicht einer Kopplungskonstruktion mit Befestigungsmitteln.

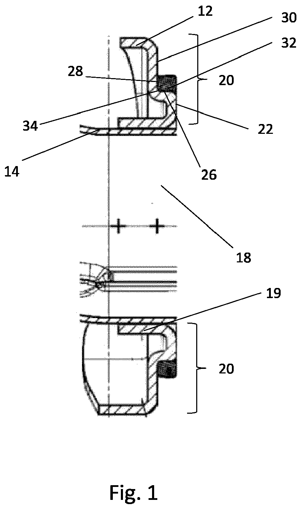

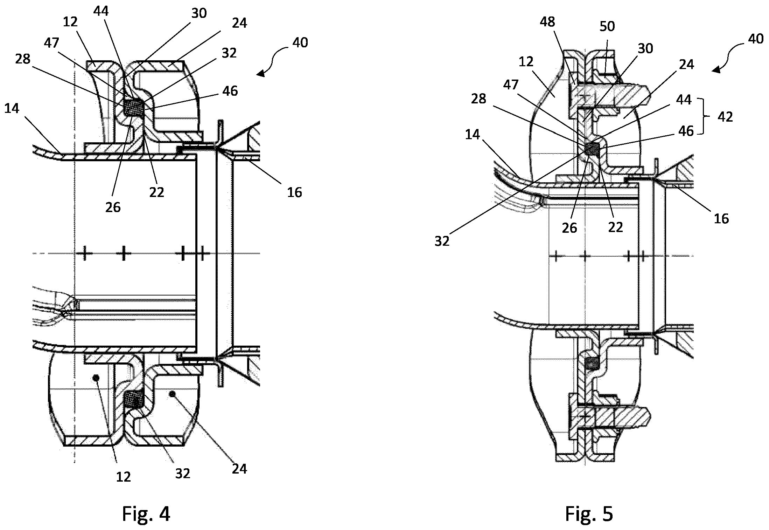

Fig. 1 zeigt eine Querschnittsansicht einer ersten Kopplungskomponente 12 zur dichten Kopplung eines ersten gasführenden Bauteils 14 und eines nicht gezeigten zweiten gasführenden Bauteils einer Abgasanlage, wobei die erste Kopplungskomponente 12 an dem ersten gasführenden Bauteil 14 befestigt ist, z.B. durch Verschweißen. Ferner umfasst die erste Kopplungskomponente 12 eine Öffnung 18, die durch einen Stutzen 19 gebildet wird, in den das erste gasführende Bauteil 14 gesteckt ist, und einen die Öffnung 18 umgebenden Anlageabschnitt 20 mit einer Anlagefläche 22, die mit einer komplementären Fläche eines Anlageabschnitts einer zweiten Kopplungskomponente 24 (siehe Fig. 4 und 5) des zweiten gasführenden Bauteils 16 in Anlage bringbar ist. Ferner umfasst die erste Kopplungskomponente 12 einen die Anlagefläche 22 radial außerhalb und in Umfangsrichtung umgebenden Dichtungsabschnitt, der eine sich in axiale Richtung erstreckende - im Querschnitt horizontale - Aufpressfläche 26 und eine sich in radiale Richtung erstreckende - im Querschnitt vertikale - Dichtungsanlagefläche 28 umfasst. Die Dichtungsanlagefläche 28 und die Aufpressfläche 26 stehen zumindest teilweise senkrecht zueinander und gehen an einem Krümmungsabschnitt 34 ineinander über. Die erste Kopplungskomponente 12 umfasst ferner einen die Dichtungsanlagefläche 28 radial außerhalb und in Umfangsrichtung umgebende äußere Anlagefläche 30, die wie auch die Anlagefläche 22 in einem Kopplungszustand mit einer zweiten Kopplungskomponente 24 an der zweiten Kopplungskomponente 24, insbesondere direkt und flächig, anliegt. Ferner umfasst die erste Kopplungskomponente 12 eine auf die Aufpressfläche 26 aufgepresste und an der Dichtungsanlagefläche 28 anliegende, insbesondere ringförmige, hitzebeständige Dichtung 32, welche an dem Dichtungsabschnitt bzw. an der Aufpressfläche 26 verliersicher fixiert ist. Die Dichtung 32 ist derart stabil an der Aufpressfläche 26 aufgepresst und fixiert, dass sich diese auch bei, insbesondere ruckartigen, Bewegungen, wie sie beispielsweise bei einem Transport der ersten Kopplungskomponente 12 vorkommen können, nicht von der ersten Kopplungskomponente 12 löst.

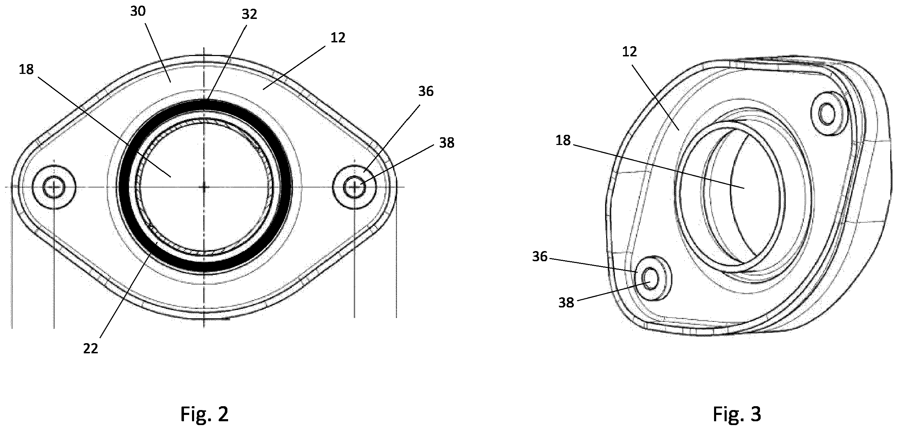

Fig. 2 zeigt eine Frontansicht der Kopplungskomponente der Fig. 1, wobei die Kopplungskomponente in der Frontansicht eine zitronenförmige Kontur aufweist. Zusätzlich zur Darstellung in Fig. 1 sind zwei Befestigungsabschnitte 36 gezeigt, die radial außerhalb der Öffnung 18 im Bereich des Anlageabschnitts 20 an den beiden gegenüberliegenden, sich verjüngenden Enden der ersten Kopplungskomponente 12 angeordnet sind. Die Befestigungsabschnitte 36 umfassen jeweilige Befestigungsöffnungen 38, durch die Befestigungsmittel wie beispielsweise Schrauben geführt werden können, um die erste Kopplungskomponente 12 mit der zweiten Kopplungskomponente 24 zu koppeln.

Fig. 3 zeigt eine perspektivische Ansicht der Rückseite der ersten Kopplungskomponente 12.

Fig. 4 zeigt eine Querschnittsansicht einer Kopplungskonstruktion 40 in einem gekoppelten Zustand, in dem das erste gasführende Bauteil 14, an dem die erste Kopplungskomponente 12 befestigt ist, und ein zweites gasführendes Bauteil 16, an dem die zweite Kopplungskomponente 24 befestigt ist, mittels der ersten Kopplungskomponente 16 und der zweiten Kopplungskomponente 24 gekoppelt sind. Wie in Fig. 4 erkennbar ist, stehen die erste Kopplungskomponente 12 und die zweite Kopplungskomponente 24 zumindest teilweise über die jeweiligen Anlageflächen 22 und äußeren Anlageflächen 30 in direktem Kontakt miteinander, wobei der Dichtungsabschnitt der ersten Kopplungskomponente 12 gemeinsam mit einem Dichtungsabschnitt 42 der zweiten Kopplungskomponente 24, welcher einen sich in axialer Richtung erstreckenden ersten Dichtungsabschnitt 44 und einen sich in radialer Richtung erstreckenden zweiten Dichtungsabschnitt 46 umfasst, einen Dichtungsraum 47 bilden, in dem die Dichtung 32 angeordnet und verpresst ist. Im gekoppelten Zustand wird somit eine derart dichte Konstruktion geschaffen, dass der Austritt von Gas an einer Kopplungsschnittstelle zwischen dem ersten gasführenden Bauteil 14 und dem zweiten gasführenden Bauteil 16 verhindert wird.

Fig. 5 zeigt eine Querschnittsansicht einer Kopplungskonstruktion 40 in einem gekoppelten Zustand, wobei in dem Querschnitt der Fig. 5 aufgrund einer Drehung der Konstruktion 40 um etwa 90° zusätzlich die Befestigungsabschnitte 36 gezeigt sind, mittels derer die erste Kopplungskomponente 12 an der zweiten Kopplungskomponente 24 befestigt ist. Wie aus Fig. 5 ersichtlich ist, werden die beiden Kopplungskomponenten 12, 24 an den Befestigungsabschnitten 36 mittels Schrauben 48, welche durch die Befestigungsöffnungen 38 geführt werden, und einer zugehörigen Mutter 50 aneinander befestigt. Alternative Befestigungsarten sind denkbar.

### Bezugszeichenliste

- 12: erste Kopplungskomponente
- 14: erstes gasführendes Bauteil
- 16: zweites gasführendes Bauteil
- 18: Öffnung
- 19: Stutzen
- 20: Anlageabschnitt
- 22: Anlagefläche
- 24: zweite Kopplungskomponente
- 26: Aufpressfläche
- 28: Dichtungsanlagefläche
- 30: äußere Anlagefläche
- 32: Dichtung
- 34: Krümmungsabschnitt
- 36: Befestigungsabschnitt
- 38: Befestigungsöffnung
- 40: Kopplungskonstruktion
- 42: Dichtungsabschnitt der zweiten Kopplungskomponente
- 44: erster Dichtungsabschnitt
- 46: zweiter Dichtungsabschnitt
- 47: Dichtungsraum
- 48: Schraube
- 50: Mutter

## Patentansprüche

1. Kopplungskomponente zur dichten Kopplung eines ersten und eines zweiten gasführenden Bauteils (14, 16) einer Abgasanlage, insbesondere zur Kopplung zweier Rohrleitungsabschnitte, umfassend:
eine Öffnung (18), in welcher ein Endabschnitt des ersten Bauteils (14) aufnehmbar ist;
einen die Öffnung (18) umgebenden Anlageabschnitt (20) mit einer Anlagefläche (22), die mit einer komplementären Fläche eines Anlageabschnitts (20) einer Kopplungskomponente des zweiten Bauteils (16) in Anlage bringbar ist und die einen die Anlagefläche (22) radial außerhalb und in Umfangsrichtung umgebenden Dichtungsabschnitt aufweist, der eine sich in axialer Richtung erstreckende Aufpressfläche (26) umfasst; und
eine auf die Aufpressfläche (26) aufgepresste hitzebeständige Dichtung (32), wobei die die Dichtung (32) verliersicher an der Aufpressfläche (26) fixiert ist.

2. Kopplungskomponente nach Anspruch 1,
wobei die Dichtung (32) nur reib- und/oder kraftschlüssig an der Aufpressfläche (26) fixiert ist.

3. Kopplungskomponente nach Anspruch 1 oder 2,
wobei die Dichtung (32) zumindest teilweise, insbesondere vollständig, aus Graphit gefertigt ist.

4. Kopplungskomponente nach einem der vorstehenden Ansprüche,
wobei der Anlageabschnitt (20) eine äußere Anlagefläche (30) aufweist, die den Dichtungsabschnitt in radialer Richtung außerhalb umgibt.

5. Kopplungskomponente nach Anspruch 4,
wobei der Dichtungsabschnitt eine sich in radialer Richtung erstreckende Dichtungsanlagefläche (28) umfasst, insbesondere wobei die Dichtungsanlageflächen (28) und die äußere Anlagefläche (30) in einer gemeinsamen Ebene angeordnet sind.

6. Kopplungskomponente nach Anspruch 5,
wobei die Aufpressfläche (26) und die die Dichtungsanlagefläche (28) aneinandergrenzen, insbesondere wobei die Aufpressfläche (26) und die Dichtungsanlagefläche (28) zumindest abschnittsweise senkrecht zueinander angeordnet sind.

7. Kopplungskomponente nach einem der Ansprüche 4 bis 6,
wobei die Anlagefläche (22) und die äußere Anlagefläche (30) parallel versetzt angeordnet sind.

8. Kopplungskomponente nach einem der vorstehenden Ansprüche,
wobei die Dichtung (32) in einem Zustand, in dem das erste und das zweite Bauteil (14, 16) nicht gekoppelt sind, in axialer Richtung zumindest teilweise über die Anlagefläche (22) hinausragt.

9. Zusammenbauteil umfassend eine Kopplungskomponente nach einem der vorstehenden Ansprüche und ein erstes gasführendes Bauteil (14) einer Abgasanlage, insbesondere ein Rohrleitungsabschnitt,
wobei die Kopplungskomponente flanschartig ausgebildet ist und/oder wobei die Kopplungskomponente mit dem ersten Bauteil (14) einstückig ausgebildet ist oder stoffschlüssig, kraftschlüssig und/oder formschlüssig mit diesem verbunden ist.

10. Verfahren zur Herstellung einer Kopplungskomponente mit den Schritten:
Bereitstellen einer Kopplungskomponente nach einem der vorstehenden Ansprüche ohne eine aufgepresste Dichtung,
Bereitstellen einer Dichtung (32) und
Befestigung der Dichtung (32) an der Kopplungskomponente, wobei die Dichtung (32) auf die Aufpressfläche (26) aufgepresst wird, insbesondere in axialer Richtung auf die Aufpressfläche (26) aufgeschoben wird, sodass eine Reibungskraft zwischen der Dichtung (32) und der Aufpressfläche (26) ausgebildet wird, um die Dichtung (32) verliersicher an der Aufpressfläche (26) zu fixieren.

11. Kopplungskonstruktion (40), umfassend eine erste Kopplungskomponente (12) gemäß einem der Ansprüche 1 bis 8 und eine zweite Kopplungskomponente (24), wobei die zweite Kopplungskomponente (24) eine Öffnung (18), in welcher ein Endabschnitt des zweiten gasführenden Bauteils (16) aufnehmbar ist, einen die Öffnung (18) umgebenden Anlageabschnitt (20) mit einer Anlagefläche (22), der mit einem Anlageabschnitt (20) der ersten Kopplungskomponente (12) in Anlage bringbar ist, und die einen die Anlagefläche (22) radial außerhalb und in Umfangsrichtung umgebenden Dichtungsabschnitt aufweist, wobei der Dichtungsabschnitt einen sich in axialer Richtung erstreckenden ersten Dichtungsabschnitt (44) und einen sich in radialer Richtung erstreckenden zweiten Dichtungsabschnitt (46) aufweist, wobei - in einem montierten Zustand - die Anlagefläche (22) der ersten Kopplungskomponente (12) zumindest abschnittsweise an der Anlagefläche der zweiten Kopplungskomponente (24) anliegt und wobei die erste und zweite Kopplungskomponente (12, 26) mittels eines Befestigungsmittels aneinander befestigt sind, wobei der Dichtungsabschnitt der ersten Kopplungskomponente (12) und der Dichtungsabschnitt (42) der zweiten Kopplungskomponente (26) im montierten Zustand einen in Umfangsrichtung laufenden Dichtungsraum (47) bilden, in dem eine Dichtung (32) angeordnet und verpresst ist.
